# EUROPÄISCHE PATENTANMELDUNG

(11) **EP 0 535 324 A1**
(43) Veröffentlichungstag der Anmeldung: **07.04.1993**
(21) Anmeldenummer: 92112981.3
(22) Anmeldetag: 30.07.1992
(51) Int. Cl.: G02F 1/1335, G02F 1/1347

(54) **Flüssigkristallanzeige**

(30) Priorität: 04.10.1991 DE 4132902
(71) Anmelder: OPTREX EUROPE GmbH, D-65760 Eschborn (DE)
(72) Erfinder: Fertig, Werner, W-6101 Rossdorf (DE); Wahl, Jürgen, W-6232 Bad Soden (DE); Ott, Thomas, W-6053 Obertshausen (DE)
(74) Vertreter: Klein, Thomas, Dipl.-Ing. (FH)

(57) **Zusammenfassung**

Die Erfindung bezieht sich auf eine Flüssigkristallanzeige mit einer Flüssigkristallzelle 1, die aus zwei im Abstand voneinander angeordneten Substraten 2 gebildet und mit einer nematischen Flüssigkristallsubstanz 4 gefüllt ist. Zelleninnenraumseitig sind auf den Substaten 2 spannungsbeaufschlagbare Elektrodenschichten 3 angeordnet. Zellenaußenraumseitig erstreckt sich über die Zellenfläche eine doppelbrechende Kompensationsschicht (5,9). Flüssigkristallzelle 1 und Kompensationsschicht sind zwischen zwei Polarisationsfiltern 11 angeordnet. Die Kompensationsschicht (5,9) ist über ihre Flächenerstreckung mit einer Vielzahl einander benachbarter Bereiche ausgebildet, deren Betrag der optischen Verzögerung (d· Δ n) um eine geringes Maß voneinander abweicht.

## Beschreibung

Die Erfindung bezieht sich auf eine Flüssigkristallanzeige mit einer Flüssigkristallzelle, die aus zwei im Abstand von einander angeordneten Substraten gebildet und mit einer Flüssigkristallsubstanz gefüllt ist, mit zelleninnenraumseitig auf den Substraten angeordneten, spannungsbeaufschlagbaren Elektrodenschichten und einer zellenaußenraumseitig sich über die Zellenfläche erstreckenden doppelbrechenden Kompensationsschicht, wobei vor und/oder hinter der Einheit aus Flüssigkristallzelle und Kompensationsschicht ein Polarisationsfilter angeordnet ist.
Bei derartigen Flüssigkristallanzeigen mit einer nematischen Flüssigkristallsubstanz ist es bekannt, als Kompensationsschicht entweder eine doppelbrechende Folie oder eine nichtansteuerbare zweite Flüssigkristallzelle zu verwenden. Damit sollen Interferenz-Färbungen der Flüssigkristallanzeige beeinflußt bzw. vermieden werden. Durch die auf den Substraten sich zum Teil gegenüberliegende Anordnung der Elektroden bzw. herstellungstoleranzbedingt kommt es in den verschiedenen Bereichen der Flüssigkristallzellen zu unterschiedlichen Höhen des Zellenraums und damit auch zu unterschiedlichen Dicken der Flüssigkristallschicht. Somit weichen die Beträge der Doppelbrechung in den verschiedenen Bereichen der Flüssigkristallanzeige voneinander ab. Dies führt dazu, daß die Transmission und die Farbe der Anzeige ungleichmäßig ist.
Dieses Problem wirkt sich besonders stark bei Flüssigkristallzellen aus, bei denen der Verdrehungswinkel der Flüssigkristallsubstanz größer als 90° ist, da dort wesentlich geringere Schichtdickentoleranzen der Flüssigkristallsubstanz eingehalten werden müssen, als bei normalen verdreht nematischen Flüssigkristallanzeigen.

Aufgabe der Erfindung ist es daher eine Flüssigkristallanzeige der eingangs genannten Art zu schaffen, die mit einfachen und leicht herstellbaren Mitteln eine gleichmäßige Transmission und Farbe aufweist.

Diese Aufgabe wird erfindungsgemäß dadurch gelöst, daß die Kompensationsschicht über ihre Flächenerstreckung mit einer Vielzahl einander benachbarter Bereiche ausgebildet ist, deren Betrag der Doppelbrechung um ein geringes Maß voneinander abweicht. Eine derartige Ausbildung bedeutet zwar, daß der Betrag der Doppelbrechung unterschiedlich ist. Da aber eine Vielzahl Bereiche unterschiedlichen Doppelbrechungsbetrages über die ganze Anzeigefläche verteilt vorhanden sind, erscheint für einen Beobachter die ganze Anzeigefläche als homogene Fläche gleichmäßiger Transmission und gleichmäßiger Farbe. Dies insbesondere, wenn die Bereiche unterschiedlichen Doppelbrechungsbetrages eine geringere Erstreckung aufweisen als durch das menschliche Auge aus normaler Betrachterposition auflösbar ist und somit als einzelne separate Bereiche vom Beobachter nicht wahrgenommen werden können.

Vorzugsweise ist die Flüssigkristallsubstanz eine nematische Flüssigkristallsubstanz. Die Anordnung der Bereiche unterschiedlichen Doppelbrechungsbetrages an der Kompensationsschicht läßt sich mit einfachen Mitteln und auf einfache Weise ohne das Erfordernis komplizierter Herstellungsschritte und eines Eingriffes in die Flüssigkristallzelle durchführen.

Eine leicht herstellbare Auführungsform besteht darin, daß die doppelbrechende Kompensationsschicht von einer nicht ansteuerbaren zweiten Flüssigkristallzelle gebildet ist, die aus zwei im Abstand voneinander angeordneten Substraten besteht und mit einer verdreht nematischen Flüssigkristallsubstanz gefüllt ist, wobei die Bereiche unterschiedlichen Doppelbrechungsbetrages durch Bereiche unterschiedlicher Zellendicken ausgebildet sind. Es ist aber auch möglich, daß die Bereiche unterschiedlichen Doppelbrechungsbetrages an den zellenraumseitigen Flächen beider Substrate ausgebildet sind.

Zur Erzeugung der Bereiche unterschiedlichen Doppelbrechungsbetrages könnnen an der zellenraumseitigen Fläche des bzw. der Substrate eine Vielzahl von Vertiefungen gebildet sein, die vorzugsweise eine Tiefe aufweisen, die etwa der Größe der Schichtdickenunterschiede der Flüssigkristallschicht der ersten Flüssigkristallzelle über deren Flächenerstreckung entspricht.

Die Vertiefungen können entweder gleichmäßig oder ungleichmäßig verteilt angeordnet sein.

Die zellenraumseitig ausgebildeten Vertiefungen können durch entsprechende Strukturierung der Substratflächen selbst erzeugt sein.

Eine andere Möglichkeit besteht darin, mit den Vertiefungen versehene Beschichtungen, wie z.B. Folien auf die zellenraumseitige Fläche des Substrats aufzubringen, wobei die Vertiefungen z.B. durch Prägen erzeugt werden können.

Ein anderes ebenfalls einfach herstellbares Ausführungsbeispiel besteht darin, daß die doppelbrechende Kompensationsschicht zellenraumaußenseitig der ansteuerbaren Flüssigkristallzelle angeordnet ist.

Um eine für die Doppelbrechung erforderliche ausreichende Schichtdicke bei einfacher Herstellbarkeit der Schicht zu erhalten, kann die doppelbrechende Kompensationsschicht mehrschichtig ausgebildet sein, wobei jeweils Schichten der mehrschichtigen Kompensationsschicht auf beiden Seiten der ansteuerbaren Flüssigkristallzelle angeordnet werden können.

In einfacher und leicht herstellbarer Weise kann die doppelbrechende Kompensationsschicht aus einer oder mehreren Folien gebildet sein

Zur Erzeugung der Bereiche unterschiedlichen Doppelbrechungsbetrages kann z.B. die Folie bzw. die Folien einer Temperaturbehandlung unterzogen worden sein.

Eine andere Möglichkeit zur Erzeugung der Bereiche unterschiedlichen Doppelbrechungsbetrages besteht darin, daß die Fläche der Folie mit einer Vielzahl von Vertiefungen versehen wird.

Auch bei dieser Ausführungsform können die Vertiefungen entweder gleichmäßig oder ungleichmäßig verteilt angeordnet sein.

Auf einfache Weise können die Vertiefungen durch einen Prägevorgang oder durch eine aufgedruckte Schicht erzeugt sein.

Besonders vorteilhaft ist es, wenn die Flüssigkristallsubstanz der ansteuerbaren und/oder nicht ansteuerbaren Flüssigkristallzelle des nematischen Typs ist und in der Zelle einen Verdrehungswinkel von 90° oder mehr aufweist, da bei einer derartigen Zelle die Vergleichmäßigungsmaßnahmen nicht im toleranzempfindlichen Bereich innerhalb der Zelle, sondern an anderer unproblematischer Stelle durchgeführt werden.

Ausführungsbeispiele der Erfindung sind in der Zeichnung dargestellt und werden im folgenden näher beschrieben. Es zeigen
- Figur 1: ein erstes Ausführungsbeispiel einer im Querschnitt dargestellten Flüssigkristallanzeige
- Figur 2: ein zweites Ausführungsbeispiel einer im Querschnitt dargestellten Flüssigkristallanzeige
Beide Ausführungsbeispiele weisen eine transmissive Flüssigkristallzelle 1 auf, auf deren aus Glas bestehenden, im Abstand voneinander angeordneten Substraten 2 zellenrauminnenseitig spannungsbeaufschlagbare Elektrodenschichten 3 zur Erzeugung des darzustellenden Bildes angeordnet sind.

In dem zwischen den Substraten 9 gebildeten Zelleninnenraum, der durch eine nicht dargestellte, im Randbereich der Substrate 2 umlaufend angeordnete Dichtung nach außen verschlossen ist, befindet sich eine Schicht einer nematischen Flüssigkristallsubstanz 4, wobei durch die Zelle ein Verdrehungswinkel von mehr als 90° erzeugt wird.

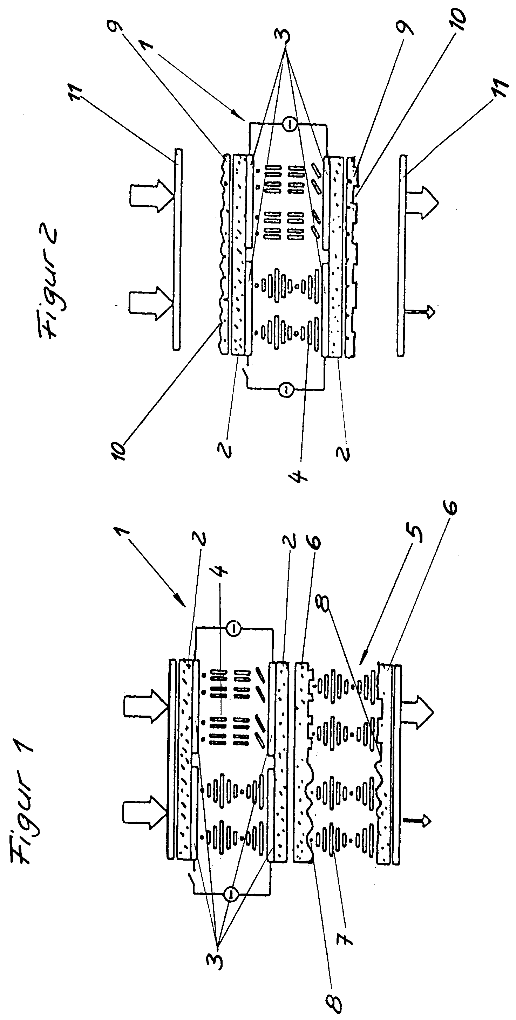

Bei dem Ausführungsbeispiel der Figur 1 befindet sich in Betrachtungsrichtung vor der ansteuerbaren Flüssigkristallzelle 1 eine zweite Flüssigkristallzelle 5 etwa gleicher Flächenerstreckung, die nicht ansteuerbar ist.
Diese zweite Flüssigkristallzelle 5 bildet eine doppelbrechende Kompensationsschicht und weist ebenfalls zwei im Abstand voneinander angeordnete Substrate 6 aus Glas auf, die zwischen sich einen durch ebenfalls eine im Randbereich umlaufend angeordnete nicht dargestellte Dichtung nach außen verschlossenen Zellenraum bilden. Dieser Zellenraum ist ebenfalls mit einer verdreht nematischen Flüssigkristallsubstanz 7 gefüllt, die durch die Gestaltung der Zelle um einen Verdrehungswinkel von mehr als 90° verdreht ist.

Zelleninnenraumseitig sind beide Substrate 6 mit einer Vielzahl von Vertiefungen 8 versehen, die auf der rechten Seite der Zelle 5 als gleichmäßig verteilte Vertiefungen mit sprunghaftem Übergang und auf der linken Seite der Zelle 5 als ungleichmäßig verteilte Vertiefungen 8 mit kontinuierlichem Übergang ausgebildet sind.

Die Vertiefungen 8 besitzen dabei eine Tiefe, die etwa der Größe der Schichtdickenunterschiede der Flüssigkristallsubstanz 4 der Flüssigkristallzelle 1 über deren Flächenerstreckung entspricht. Durch die Vertiefungen 8 und die nicht vertieften Bereiche werden in der Flüssigkristallzelle 5 eine Vielzahl Bereiche unterschiedlichen Doppelbrechungsbetrages gebildet.

Bei dem in Figur 2 dargestellten Ausführungsbeispiel sind auf jeder Seite der Flüssigkristallzelle 1 deren ganze Fläche überdeckend tranparente Folien 9 angeordnet, die eine doppelbrechende Kompensationsschicht bilden. Beide Folien 9 sind mit über ihre gesamte Fläche verteilten Vertiefungen 10 versehen, wobei die beobachterfernere Folie 9 mit ungleichmäßig verteilten Vertiefungen 10 kontinuierlichen Übergangs und die beobachternähere Folie 9 mit gleichmäßig verteilten Vertiefungen 10 sprunghaften Übergangs ausgebildet ist.

Auch bei diesem Ausführungsbeispiel werden durch die Vertiefungen 10 und die nichtvertieften Bereiche eine Vielzahl Bereiche unterschiedlichen Doppelbrechungsbetrages der Folien 9 gebildet.

Beiden Ausführungsbeispielen ist weiterhin gemeinsam, daß Flüssigkristallzelle 1 und doppelbrechende Kompensationsschicht (Flüssigkristallzelle 5 bzw. Folien 9) zwischen zwei Polarisationsfiltern 11 angeordnet sind.

## Patentansprüche

1. Flüssigkristallanzeige, mit einer Flüssigkristallzelle, die aus zwei im Abstand voneinander angeordneten Substraten gebildet und mit einer Flüssigkristallsubstanz gefüllt ist, mit zelleninnenraumseitig auf den Substraten angeordneten, spannungsbeaufschlagbaren Elektrodenschichten und einer zellenaußenraumseitig sich über die Zellenfläche erstreckenden doppelbrechenden Kompensationsschicht, wobei vor und/oder hinter der Einheit aus Flüssigkristallzelle und Kompensationsschicht ein Polarisationsfilter angeordnet ist, dadurch gekennzeichnet, daß die Kompensationsschicht über ihre Flächenerstreckung mit einer Vielzahl einander benachbarter Bereiche ausgebildet ist, deren Betrag der Doppelbrechung um ein geringes Maß voneienander abweicht.

2. Flüssigkristallanzeige nach Anspruch 1, dadurch gekennzeichnet, daß die Bereich unterschiedlichen Doppelbrechungsbetrages eine geringere Erstreckung aufweisen als durch das menschliche Auge auflösbar ist.

3. Flüssigkristallanzeige nach einem der vorhergehenden Ansprüche, dadurch gekennzeichnet, daß die doppelbrechende Kompensationsschicht von einer nicht ansteuerbaren zweiten Flüssigkristallzelle (5) gebildet ist, die aus zwei im Abstand voneinander angeordneten Substraten (6) besteht und mit einer verdreht nematischen Flüssigkristallsubstanz (7) gefüllt ist, wobei die Bereiche unterschiedlichen Doppelbrechungsbetrages an einer der zellenraumseitigen Flächen der Substrate (6) ausgebildet sind.

4. Flüssigkristallanzeige nach Anspruch 3, dadurch gekennzeichnet, daß die Bereiche unterschiedlichen Doppelbrechungsbetrages durch Bereiche unterschiedlicher Zellendicke ausgebildet sind.

5. Flüssigkristallanzeige nach Anspruch 4, dadurch gekennzeichnet, daß die Bereiche unterschiedlichen Doppelbrechungsbetrages durch eine Ausbildung an der zellenraumseitigen Fläche des bzw. der Substrate (6) mit einer Vielzahl von Vertiefungen (8) gebildet sind.

6. Flüssigkristallanzeige nach Anspruch 5, dadurch gekennzeichnet, daß die Vertiefungen (8) eine Tiefe aufweisen, die etwa der Größe der Schichtdickenunterschiede der Flüssigkristallschicht der ersten Flüssigkristallzelle (1) über deren Flächenerstreckung entspricht.

7. Flüssigkristallanzeige nach Anspruch 5, dadurch gekennzeichnet, daß die Vertiefungen (8) gleichmäßig verteilt angeordnet sind.

8. Flüssigkristallanzeige nach Anspruch 5, dadurch gekennzeichnet, daß die Vertiefungen (8) ungleichmäßig verteilt angeordnet sind.

9. Flüssigkristallanzeige nach Anspruch 5, dadurch gekennzeichnet, daß die Vertiefungen (8) an der zellenraumseitigen Fläche des Substrats (6) ausgebildet sind.

10. Flüssigkristallanzeige nach Anspruch 5, dadurch gekennzeichnet, daß die zellenraumseitige Fläche des Substrats mit einer die Vertiefungen aufweisenden Beschichtung versehen ist.

11. Flüssigkristallanzeige nach einem der Ansprüche 1 und 2, dadurch gekennzeichnet, daß die doppelbrechende Kompensationsschicht zellenraumaußenseitig der ansteuerbaren Flüssigkristallzelle (1) angeordnet ist.

12. Flüssigkristallanzeige nach Anspruch 11, dadurch gekennzeichnet, daß die doppelbrechende Kompensationsschicht mehrschichtig ausgebildet ist.

13. Flüssigkristallanzeige nach Anspruch 12, dadurch gekennzeichnet, daß jeweils Schichten der mehrschichtigen Kompensationsschicht auf beide Seiten der ansteuerbaren Flüssigkristallzelle (1) angeordnet sind.

14. Flüssigkristallanzeige nach Anspruch 12, dadurch gekennzeichnet, daß die doppelbrechende Kompensationsschicht aus einer oder mehreren Folien (9) gebildet ist.

15. Flüssigkristallanzeige nach Anspruch 14, dadurch gekennzeichnet, daß die Bereiche unterschiedlichen Doppelbrechungsbetrages durch eine Temperaturbehandlung der Folie erzeugt sind.

16. Flüssigkristallanzeige nach Anspruch 14, dadurch gekennzeichnet, daß die Bereich unterschiedlichen Doppelbrechungsbetrages durch Ausbildung einer Fläche der Folie (9) mit einer Vielzahl von Vertiefungen (10) gebildet sind.

17. Flüssigkristallanzeige nach Anspruch 16, dadurch gekennzeichnet, daß die Vertiefungen (10) gleichmäßig verteilt angeordnet sind.

18. Flüssigkristallanzeige nach Anspruch 16, dadurch gekennzeichnet, daß die Vertiefungen (10) ungleichmäßig verteilt angeordnet sind.

19. Flüssigkristallanzeige nach Anspruch 16, dadurch gekennzeichnet, daß die Vertiefungen (10) durch einen Prägevorgang erzeugt sind.

20. Flüssigkristallanzeige nach einem der vorhergehenden Ansprüche, dadurch gekennzeichnet, daß die Flüssigkristallsubstanz (4, 7) der ansteuerbaren und/oder der nicht ansteuerbaren Flüssigkristallzelle (1, 5) des nematischen Typs ist und in der Zelle einen Verdrehungswinkel von 90° oder mehr aufweist.
